(19) Europäisches Patentamt
European Patent Office
Office européen des brevets

(11) **EP 3 394 793 B1**

(12) **FASCICULE DE BREVET EUROPEEN**

(45) Date de publication et mention
de la délivrance du brevet:
**05.05.2021 Bulletin 2021/18**

(21) Numéro de dépôt: **16812968.2**

(22) Date de dépôt: **21.12.2016**

(51) Int Cl.:
*G06K 9/00* *(2006.01)*      *G06K 9/20* *(2006.01)*

(86) Numéro de dépôt international:
**PCT/EP2016/082066**

(87) Numéro de publication internationale:
**WO 2017/108883 (29.06.2017 Gazette 2017/26)**

(54) **PROCEDE POUR RECONNAITRE UNE FAUSSE EMPREINTE PAPILLAIRE PAR ECLAIRAGE STRUCTURE**

VERFAHREN ZUR ERKENNUNG EINER FALSCHEN PAPILLÄREN PRÄGUNG DURCH STRUKTURBELEUCHTUNG

METHOD FOR RECOGNISING A FALSE PAPILLARY IMPRINT BY STRUCTURE LIGHTING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2015 FR 1563180**

(43) Date de publication de la demande:
**31.10.2018 Bulletin 2018/44**

(73) Titulaires:
• **Commissariat à l'Energie Atomique et aux Energies Alternatives**
**75015 Paris (FR)**
• **Idemia Identity & Security France**
**92400 Courbevoie (FR)**

(72) Inventeurs:
• **MAINGUET, Jean-François**
**38100 Grenoble (FR)**
• **BOUTET, Jérôme**
**38640 Claix (FR)**
• **FOURRE, Joël Yann**
**78160 Marly Le Roi (FR)**

(74) Mandataire: **Brevalex**
**56, Boulevard de l'Embouchure**
**B.P. 27519**
**31075 Toulouse Cedex 2 (FR)**

(56) Documents cités:
**WO-A1-2008/111994      WO-A2-2008/050070**

• **BOZHAO TAN ET AL: "Spoofing protection for fingerprint scanner by fusing ridge signal and valley noise", PATTERN RECOGNITION, vol. 43, no. 8, 1 août 2010 (2010-08-01), pages 2845-2857, XP055133944, ISSN: 0031-3203, DOI: 10.1016/j.patcog.2010.01.023**
• **JAVIER GALBALLY ET AL: "A high performance fingerprint liveness detection method based on quality related features", FUTURE GENERATIONS COMPUTER SYSTEMS, ELSEVIER SCIENCE PUBLISHERS. AMSTERDAM, NL, vol. 28, no. 1, 29 novembre 2010 (2010-11-29), pages 311-321, XP028293366, ISSN: 0167-739X, DOI: 10.1016/J.FUTURE.2010.11.024 [extrait le 2010-12-08]**
• **Shoude Chang ET AL: "Fingerprint Spoof Detection Using Near Infrared Optical Analysis" In: "State of the art in Biometrics", 27 juillet 2011 (2011-07-27), INTECH, XP055274349, Section 2**

**Description**

**DOMAINE TECHNIQUE**

L'invention se rapporte au domaine des capteurs d'empreintes papillaires. Elle concerne plus particulièrement un procédé de détection de fraude.

Une empreinte papillaire désigne une empreinte liée aux plis particuliers de la peau, en particulier une empreinte digitale, mais également une empreinte palmaire, plantaire, ou phalangeaire.

Une telle empreinte forme un moyen efficace d'identification de personne. Ce moyen d'identification peut être complété par une détection de fraude, afin de détecter lorsqu'une véritable empreinte papillaire est remplacée par une imitation. En d'autres termes, il s'agit de reconnaître si une empreinte papillaire est une vraie empreinte, constituée de tissu vivant humain, ou une fausse empreinte, qui n'est pas constituée de tissu vivant humain (par exemple en latex, en caoutchouc, ou en gélatine).

**ÉTAT DE LA TECHNIQUE ANTÉRIEURE**

On connaît dans l'art antérieur différents procédés pour reconnaître une fausse empreinte papillaire, exploitant les propriétés optiques spécifiques d'un tissu humain vivant, en particulier sa réponse spectrale. Les demandes de brevet WO 2008/050070 et WO2008/111994 décrivent des exemples d'un tel procédé.

Un inconvénient de ce procédé est notamment qu'il n'offre une caractérisation qu'en de petits emplacements bien particuliers sur l'empreinte. Ces emplacements peuvent être connus par le fraudeur. En recouvrant son doigt par une imitation d'une empreinte digitale, excepté en ces petits emplacements, il peut tromper la détection de fraude.

Un objectif de la présente invention est de proposer un procédé et un dispositif permettant de pallier à cet inconvénient de l'art antérieur.

**EXPOSÉ DE L'INVENTION**

Cet objectif est atteint avec un procédé selon la revendication 1.

Ce procédé ne nécessite pas l'émission d'un signal lumineux supplémentaire, autre que celui qui est utile pour imager l'empreinte papillaire.

La caractérisation de l'empreinte papillaire met en œuvre un éclairage dit structuré, c'est-à-dire correspondant à l'allumage de certains dispositifs d'éclairage seulement. A partir de cet éclairage, on peut caractériser l'empreinte papillaire pour en déduire si elle est constituée ou non de tissu vivant humain. Cette caractérisation n'impose pas l'utilisation de plusieurs longueurs d'onde d'éclairage.

Chaque photo-détecteur du capteur optique matriciel peut contribuer à la détection de fraude, ce qui offre une excellente résolution de la détection de fraude sans augmenter l'encombrement d'un appareillage nécessaire à la mise en œuvre du procédé.

La détection de fraude ainsi mise en œuvre peut donc caractériser toute la surface de l'empreinte en contact physique direct avec la surface de contact du capteur optique matriciel.

Le procédé selon l'invention offre donc une détection de fraude consolidée, en comparaison des procédés de l'art antérieur.

Chaque figure d'éclairement est uniforme selon l'axe de la largeur de la surface de détection du capteur optique matriciel.

Les au moins deux coefficients optiques caractéristiques de l'empreinte comprennent un coefficient d'absorption $\mu_A$ et un coefficient de diffusion réduit $\mu_S'$.

$\mu_A$ s'exprime en mm-1 ou cm$^{-1}$, et correspond à une intensité optique absorbée par unité de longueur, dans un matériau.

$\mu_S'$ s'exprime en mm-1 ou cm$^{-1}$, et correspond une intensité optique diffusée par unité de longueur dans le matériau $\mu_S' = (1 - g) * \mu_s$, $g$ étant le coefficient d'anisotropie.

Chaque figure d'éclairement s'étend avantageusement au-dessus la surface de détection du capteur optique matriciel, et est constituée d'une ou plusieurs bande(s) lumineuse(s) parallèle(s) à des lignes de pixels du capteur optique matriciel.

De préférence, l'illumination de l'empreinte papillaire peut être mise en œuvre à l'aide de moyens d'éclairage disposés au-dessus du capteur optique matriciel, et tels que chaque dispositif d'éclairage est constitué d'une diode électroluminescente organique.

On détermine avantageusement les valeurs des coefficients optiques caractéristiques de l'empreinte papillaire, en particulier le coefficient d'absorption $\mu_A$ et le coefficient de diffusion réduit $\mu_S'$, à l'aide d'un modèle prédictif de la réponse d'une empreinte à une fonction d'éclairement connu, ce modèle étant fonction desdits coefficients optiques caractéristiques, en minimisant un écart entre ce modèle et une mesure expérimentale de la réponse de l'empreinte papillaire à ce même éclairement, obtenue à l'aide des pixels sélectionnés.

En variante, on peut déterminer les valeurs des coefficients optiques caractéristiques de l'empreinte papillaire, en particulier le coefficient d'absorption $\mu_A$ et le coefficient de diffusion réduit $\mu_S'$, à l'aide d'un ensemble de courbes caractéristiques de la réponse d'une empreinte à une fonction d'éclairement connue, associées chacune à des valeurs connues desdits coefficients optiques caractéristiques, en recherchant la courbe la plus ressemblante d'une courbe expérimentale correspondante obtenue à l'aide des pixels sélectionnés.

Le modèle prédictif, ou l'ensemble de courbes caractéristiques, peut être obtenu par un calcul de convolution d'une fonction d'éclairement associée à l'au moins une figure d'éclairement, avec la réponse impulsionnelle d'un milieu dont les valeurs desdits coefficients optiques caractéristiques sont connues.

De préférence, à chaque étape d'illumination de l'empreinte papillaire, les moyens d'éclairage forment ensemble au moins une figure d'éclairement définie par une fonction d'éclairement périodique selon l'axe de la longueur de la surface de détection du capteur optique matriciel.

Il est entendu, sans qu'il soit nécessaire de la préciser, que la figure d'éclairement formée par les moyens d'éclairage est différente à chaque étape d'illumination. Ainsi, une information différente peut être obtenue à chacune des étapes d'illumination.

Les moyens d'éclairage peuvent former ensemble une figure d'éclairement définie par une fonction d'éclairement spatialement périodique de type créneau.

En variante, à chaque étape d'illumination, les moyens d'éclairage forment ensemble des figures d'éclairement définissant ensemble une fonction périodique de type sinus.

Les étapes d'illumination de l'empreinte papillaire et acquisition d'une image peuvent être mises en œuvre au moins trois fois, pour une même fréquence de la fonction d'éclairement de type sinus, et pour trois déphasages différents de celle-ci.

Selon une autre variante, à chaque étape d'illumination, les moyens d'éclairage forment ensemble une figure d'éclairement définie par une fonction d'éclairement de type échelon.

Selon une autre variante, à chaque étape d'illumination, les moyens d'éclairage forment ensemble une figure d'éclairement définie par une fonction d'éclairement de type ligne mince.

On peut acquérir une série d'images, associées à différentes positions du ou des dispositifs d'éclairage allumés formant ensemble une figure d'éclairement définie par une fonction d'éclairement de type ligne mince ou échelon.

De préférence, à chaque étape d'illumination, les dispositifs d'éclairage sont allumés et éteints pour former successivement différentes figures d'éclairement, une fréquence de balayage d'une figure d'éclairement à la suivante étant synchronisée avec une fréquence de balayage de l'intégration des lignes de pixels du capteur optique matriciel.

Ladite synchronisation peut être mise en œuvre pour réaliser une illumination de l'empreinte papillaire par une fonction d'éclairement de type sinus, et l'on détermine les valeurs desdits coefficients caractéristiques de l'empreinte à l'aide de deux images acquises par le capteur optique matriciel, et associées à deux valeurs de phase distinctes de ladite fonction d'éclairement.

En variante, ladite synchronisation est mise en œuvre pour acquérir des images dans lesquelles chaque ligne de pixels est associée à une même distance à un point particulier des figures d'éclairement.

L'invention concerne également un système tel qu'énoncé en revendication 13.

## BRÈVE DESCRIPTION DES DESSINS

La présente invention sera mieux comprise à la lecture de la description d'exemples de réalisation donnés à titre purement indicatif et nullement limitatif, en faisant référence aux dessins annexés sur lesquels :

- la figure 1A illustre de façon schématique un système spécialement adapté à la mise en œuvre d'un premier mode de réalisation de procédé selon l'invention ;
- les figures 1B et 1C illustrent de façon schématique deux variantes de moyens d'éclairage selon l'invention ;
- la figure 1D illustre de façon schématique les étapes d'un procédé selon l'invention ;
- la figure 2 illustre un exemple d'un capteur d'empreintes papillaires, spécialement adapté à la mise en œuvre d'un procédé selon l'invention;
- les figures 3A à 3C illustrent une étape de sélection de pixels selon l'invention;
- la figure 4 illustre un premier mode de réalisation des étapes d'illumination du capteur optique matriciel, et acquisition d'une image;
- la figure 5 illustre une étape de comparaison à des données de référence;
- la figure 6 illustre un deuxième mode de réalisation des étapes d'illumination du capteur optique matriciel, et acquisition d'une image;
- les figures 7A et 7B illustrent un troisième mode de réalisation des étapes d'illumination du capteur optique matriciel, et acquisition d'une image;

- la figure 8 illustre un quatrième mode de réalisation des étapes d'illumination et acquisition d'une image ;
- la figure 9 illustre un cinquième mode de réalisation des étapes d'illumination et acquisition d'une image ; et
- la figure 10 illustre un sixième mode de réalisation des étapes d'illumination et acquisition d'une image.

## EXPOSÉ DÉTAILLÉ DE MODES DE RÉALISATION PARTICULIERS

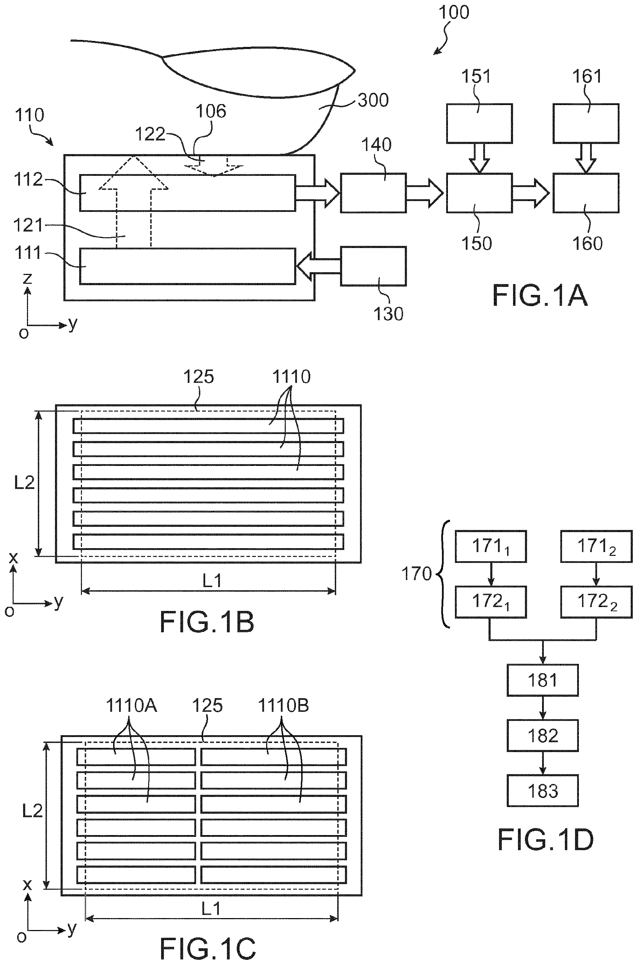

Les figures 1A à 1D illustrent de façon schématique un procédé selon l'invention ainsi qu'un système 100 spécialement adapté à la mise en œuvre de ce procédé.

Afin de faciliter la compréhension de l'invention, on décrit pour commencer le système 100, pour distinguer une vraie empreinte papillaire d'une imitation.

Dans la suite, on considérera, à titre d'exemple et de manière non limitative, qu'il s'agit d'une empreinte digitale.

Le système 100 comprend un capteur d'empreintes digitales 110 constitué par :

- une surface de contact 106, sur laquelle, en utilisation, l'utilisateur pose son doigt 300 de sorte que la peau, en d'autres termes les tissus, ou du moins la peau des crêtes de l'empreinte papillaire, soi(en)t en contact physique direct avec ladite surface 106 ;
- un capteur optique matriciel 112 formé d'une pluralité de photo-détecteurs, par exemple des diodes PiN (pour « *P-Type Intrinsic N-Type* »), des photo-détecteurs organiques (dits OPD), des phototransistors, ou tout autre élément photosensible ; et
- des moyens d'éclairage 111.

Le capteur optique matriciel 112 et les moyens d'éclairage 111 sont superposés, sous la surface de contact 106.

Le cas échéant, l'élément parmi les moyens d'éclairage 111 et le capteur optique matriciel 112 situé au-dessus de l'autre laisse passer une quantité suffisante de lumière pour réaliser la fonction d'imagerie. Cela correspond par exemple à un coefficient de transmission d'au moins 10% à la longueur d'onde centrale d'émission des moyens d'éclairage.

Le capteur optique matriciel comprend des photo-détecteurs répartis en lignes et colonnes, par exemple selon un maillage carré. L'étendue des lignes définit la largeur L1 de la surface de détection 125 du capteur optique matriciel. L'étendue des colonnes définit la longueur L2 de la surface de détection 125 du capteur optique matriciel.

La largeur L1 est alignée avec l'axe (OY). La longueur L2 est alignée avec l'axe (OX). Le plus grand côté du capteur optique matriciel peut être indifféremment la longueur ou la largeur. La surface de détection est la surface sur laquelle s'étendent les photo-détecteurs, parallèle au plan (XOY).

Les moyens d'éclairage 111 sont configurés pour émettre un signal lumineux 121 en direction d'une empreinte digitale située sur le doigt 300 (lequel est en contact physique direct avec le capteur optique matriciel, sur la surface de contact 106).

Ce signal est rétrodiffusé par le doigt et revient vers le capteur d'empreintes digitales 110 sous la forme d'un signal rétrodiffusé 122, reçu par le capteur optique matriciel 112.

Les moyens d'éclairage 111 sont constitués d'une pluralité de dispositifs d'éclairage 1110. Le capteur d'empreintes digitales 110 comprend par exemple plus de dix dispositifs d'éclairage 1110, de préférence plusieurs dizaines.

Chaque dispositif d'éclairage 1110 s'étend d'un seul tenant sur plus d'un tiers de la largeur L1 de ladite surface de détection.

En outre, ils s'étendent ensemble selon une ou deux séries de motifs parallèles entre eux, répartis selon la longueur L2 de la surface de détection.

Les dispositifs d'éclairage 1110 sont donc coplanaires, répartis ici sur une surface de dimensions supérieures ou égales à celles la surface de détection 125 du capteur optique matriciel. Ainsi, une empreinte papillaire peut être éclairée depuis des emplacements répartis partout sur cette surface.

Sur la figure 1B, les dispositifs d'éclairage 1110 s'étendent ensemble selon une seule série de motifs parallèles entre eux.

Ils s'étendent chacun sensiblement sur toute la largeur L1 de la surface de détection 125 du capteur optique matriciel, par exemple au moins 90% de cette largeur.

A la figure 1B, ils s'étendent même au-delà de cette surface de détection, ce qui limite des effets de bord sur les images acquises. En d'autres termes, ils s'étendent en-dessous (ou au-dessus) de ladite surface de détection, en dépassant de part et d'autre de cette dernière dans un plan (XOY).

Ici, les dispositifs d'éclairage présentent tous une même étendue selon l'axe (OY). De préférence, ils présentent également les mêmes dimensions selon (OX) et (OZ).

Ils s'étendent selon des motifs parallèles entre eux, ici selon des bandes parallèles entre elles.

En variante, chaque motif présente une forme en trapèze, ou en zigzag notamment sinusoïdal, ou toute autre forme allongée selon (OY). Dans toutes ces variantes, les dispositifs d'éclairage fournissent un éclairage, ou illumination, en bandes parallèles.

Les motifs formés par les dispositifs d'éclairage s'étendent ici parallèles en eux et parallèles à l'axe (OY), c'est-à-dire parallèles aux lignes de pixels du capteur optique matriciel.

En variante, ces motifs peuvent s'étendre parallèles entre eux et légèrement inclinés relativement à l'axe (OY) et aux lignes de pixels du capteur optique matriciel. Cette inclinaison, inférieure à 8°, permet dans certains cas d'améliorer la résolution des images obtenues. Dans la suite, on détaille des exemples sans inclinaison.

L'homme du métier saura réaliser des variantes similaires avec inclinaison non nulle.

Les dispositifs d'éclairage sont distribués ici de façon régulière selon (OX), leurs extrémités étant alignées sur un axe parallèle à (OX).

En particulier, ils sont répartis régulièrement selon la longueur L2 de la surface de détection 125 du capteur optique matriciel, avec un pas de répétition P1 égal au pas de pixel du capteur optique matriciel selon l'axe (OX), par exemple 25 $\mu$m ou 50 $\mu$m.

En variante, le pas de répétition P1 des dispositifs d'éclairage est constant, et distinct du pas de pixel P2 pixel du capteur optique matriciel selon (OX). En particulier, le pas de répétition P1 peut-être un multiple entier de P2. Par exemple P2 est de l'ordre de 50 $\mu$m, voire 25 $\mu$m, et P1 est entre 10 et 20 fois supérieur, par exemple de l'ordre de 500 $\mu$m, de préférence moins d'un millimètre. Chaque dispositif d'éclairage peut alors s'étendre au-dessus ou en-dessous de plusieurs lignes de pixels du capteur optique matriciel.

En fonctionnement, tous les dispositifs d'éclairage ne sont pas allumés simultanément, et on peut ne traiter que les pixels du capteur optique matriciel qui ne sont pas situés directement sous un dispositif d'éclairage allumé.

Les moyens d'éclairage 111 sont connectés à des moyens de pilotage 130, configurés pour allumer et éteindre chacun des dispositifs d'éclairage 1110 indépendamment les uns des autres.

Les moyens de pilotage 130 sont configurés pour former au moins une figure d'éclairement, correspondant à une figure formée à un instant t par les dispositifs d'éclairage 1110, parmi lesquels l'un au moins est allumé et l'un au moins est éteint.

Une figure d'éclairement correspond à la répartition spatiale de l'éclairement fourni à un instant t par les moyens d'éclairage, au niveau de la surface de contact 106. Ici, chaque figure d'éclairement s'étend au-dessus du capteur optique matriciel, sur la même largeur L1 que la surface de détection de celui-ci. Chaque figure d'éclairement est composée d'une ou plusieurs bandes lumineuses s'étendant toute la largeur L1.

Lorsque les dispositifs d'éclairage sont suffisamment proches de la surface de contact, par exemple moins d'un millimètre, les distances entre deux bandes lumineuses correspondent à des distances entre des dispositifs d'éclairage allumés.

Une figure d'éclairement peut être une image binaire dans laquelle un niveau haut correspond à un dispositif d'éclairage allumé et un niveau bas correspond à un dispositif d'éclairage éteint.

En variante, elle peut présenter des variations d'amplitude, selon une intensité lumineuse émise par chaque dispositif d'éclairage.

Chaque figure d'éclairement est uniforme selon (OY), ou au moins uniforme selon un axe légèrement incliné relativement à (OY) (8° ou moins). En d'autres termes, chaque figure d'éclairement est uniforme selon l'axe d'allongement des dispositifs d'éclairage. On détaille dans la suite différents exemples de figures d'éclairement uniformes selon (OY).

Cette uniformité est réalisée de façon particulièrement aisée, grâce à la disposition en bandes parallèles des dispositifs d'éclairage. En particulier, il n'est pas nécessaire de réaliser des moyens d'éclairage matriciels présentant par exemple plus de 3 lignes et plus de 3 colonnes. En d'autres termes, les moyens d'éclairage selon l'invention permettent d'offrir un éclairage structuré, sans pour autant nécessiter des dispositifs de connexion ou de pilotage encombrants.

On nomme étape d'illumination, l'illumination de l'empreinte par les moyens d'éclairage 111, selon une unique figure d'éclairement, ou selon une succession de plusieurs figures d'éclairement différentes les unes des autres.

Pour chaque étape d'illumination, on acquiert une image à l'aide du capteur optique matriciel 112.

Il est entendu, sans qu'il soit nécessaire de la préciser, que la figure d'éclairement formée par les moyens d'éclairage est différente à chaque étape d'illumination. Ainsi, une information différente peut être obtenue à chacune des étapes d'illumination.

La figure d'éclairement, ou la succession de plusieurs figures d'éclairement, associée(s) à une image acquise, est définie par une fonction d'éclairement.

A chaque étape d'illumination, les dispositifs d'éclairage ne sont pas tous allumés simultanément pendant l'acquisition d'une même image. Comme détaillé dans la suite, certains dispositifs d'éclairage restent éteints, et d'autre allumés, pendant toute la durée d'acquisition de l'image. En variante, les dispositifs d'éclairage se trouvent à l'état allumé ou éteint, selon l'instant considéré pendant la durée d'acquisition de l'image.

L'empreinte digitale présente un dessin formé en creux, définissant ainsi sur celle-ci des crêtes, et des vallées. Des moyens de sélection de pixel 140 reçoivent une image acquise par le capteur optique matriciel.

Ils sont configurés pour sélectionner, sur cette image, des pixels correspondant aux vallées de l'empreinte, ou des pixels correspondant aux crêtes de l'empreinte. Cette étape ne sera pas décrite ici plus longuement, car elle est connue de l'homme du métier.

Les pixels correspondant aux crêtes de l'empreinte peuvent être nommés pixels couplés. Les pixels correspondant aux vallées de l'empreinte peuvent être nommés pixels non couplés.

Dans la suite, on utilise l'une ou l'autre série de pixels sélectionnés, par exemple les pixels correspondant aux crêtes de l'empreinte.

En fonction des caractéristiques des tissus, par exemple secs ou gras, l'une ou l'autre série de pixels sélectionnés pourra être privilégiée.

Les pixels sélectionnés sont reçus par des moyens de calcul 150, agencés pour en extraire une ou plusieurs caractéristique(s) optique(s), typique(s) de la réponse de l'empreinte imagée à l'éclairement fourni par les moyens d'éclairement 111.

Cette caractéristique optique correspond de préférence à une réponse du matériau constitutif de l'empreinte.

Cette réponse peut être considérée dans l'espace de Fourier. Il s'agit par exemple d'une fonction de transfert optique, notamment une fonction d'étalement d'une ligne, une fonction d'étalement d'un échelon, une fonction de transfert de contraste, etc. Il peut également s'agir d'une fonction de transfert de modulation.

En variante, cette réponse est considérée dans l'espace réel, et il s'agit par exemple simplement d'un profil d'intensité en fonction d'une distance à une bande lumineuse de la figure d'éclairement.

Les moyens de calcul 150 sont également configurés pour utiliser la caractéristique optique ainsi extraite, afin de déterminer les valeurs respectives d'au moins deux coefficients optiques, caractéristiques du matériau constitutif de l'empreinte digitale imagée.

Ces coefficients optiques sont avantageusement un coefficient d'absorption $\mu_A$ et un coefficient de diffusion réduit $\mu_S'$, tels que définis dans l'exposé de l'invention.

La détermination des valeurs de ces coefficients utilise un modèle 151.

Il s'agit notamment d'un modèle prédictif de la réponse de l'empreinte digitale à l'éclairement fourni par les moyens d'éclairage 111. Ce modèle dépend des valeurs des coefficients optiques $\mu_A$ et $\mu_S'$ On peut considérer qu'il s'agit d'un modèle prédictif de la réponse d'un matériau de coefficients $\mu_A$ et $\mu_S'$ connus.

Les moyens de calcul 150 sont connectés à des moyens 160 pour comparer lesdites valeurs des coefficients optiques caractéristiques de l'empreinte, et des données de référence 161, afin de distinguer des valeurs associées à une empreinte digitale constituée de tissus vivants humains et des valeurs associées à une empreinte digitale constituée de matériaux ni vivants ni humains.

En variante, le modèle 151, utilisé pour calculer les valeurs de $\mu_A$ et $\mu_S'$, est un ensemble de réponses expérimentales ou théoriques du type de la caractéristique optique extraite, chaque réponse étant associée directement à des valeurs connues des coefficients optiques $\mu_A$ et $\mu_S'$ et à une information sur le matériau présentant ces valeurs des coefficients optiques $\mu_A$ et $\mu_S'$. En particulier, chaque réponse est associée à l'information selon laquelle ledit matériau est, ou n'est pas, un tissu vivant humain. Dans ce cas, la dernière étape de comparaison n'est pas toujours nécessaire.

La figure 1D illustre de façon schématique les étapes d'un procédé selon l'invention.

On illumine l'empreinte à l'aide des moyens d'éclairage 111, par une unique, ou une succession de figure(s) d'éclairement (étape $171_1$). Durant cette étape d'illumination, on acquiert une image à l'aide du capteur optique matriciel 112 (étape $172_1$). Ces deux étapes sont répétées au moins une fois, par exemple deux fois, pour former une étape 170 d'illumination de l'empreinte et acquisition d'images.

Les plusieurs acquisitions sont réalisées pendant un intervalle de temps très court, durant lequel le doigt est immobile ou presque (par exemple un déplacement maximum du doigt inférieur à 50 micromètres). Le cas échéant, on peut identifier qu'il n'y a pas eu de mouvement, et le cas échéant rejeter une zone de mouvement, voire même toutes les images brutes acquises à compter d'un instant prédéterminé.

A l'étape 181, on sélectionne, sur chaque image acquise, les pixels associés aux crêtes de l'empreinte. En variante, on sélectionne, sur chaque image acquise, les pixels associés aux vallées de l'empreinte.

Cette sélection est avantageusement réalisée en utilisant une image dans laquelle toute l'empreinte est suffisamment éclairée.

Par exemple, on acquiert en outre une image lorsque tous les dispositifs d'éclairage sont allumés. Cette image est acquise durant le même intervalle de temps très court tel que décrit ci-dessus. Sur cette image, on peut facilement identifier tous les pixels associés aux crêtes de l'empreinte, et tous ceux associés aux vallées de l'empreinte.

L'emplacement de ces pixels est le même sur toutes les autres images, acquises par le capteur à l'étape 170. On peut alors sélectionner aisément les pixels associés aux crêtes ou aux vallées de l'empreinte, sur les autres images acquises par le capteur, même là où l'empreinte est peu éclairée du fait de l'éclairage structuré.

Au lieu d'acquérir une image lorsque tous les dispositifs d'éclairage sont allumés, on peut calculer une telle image, en combinant les plusieurs images acquises pour les différentes combinaisons d'au moins un dispositif d'éclairage allumé et au moins un éteint.

A l'étape suivante 182, on extrait la caractéristique optique définissant la réponse de l'empreinte digitale aux éclairements mises en œuvre à l'étape 170, et on utilise cette caractéristique optique pour déterminer les valeurs des coefficients optiques caractéristiques.

A l'étape 183, on compare le jeu de valeurs des coefficients optiques caractéristiques aux données de référence, pour déterminer si l'empreinte digitale imagée est une vraie empreinte ou non.

En d'autres termes, on réalise une classification, basée par exemple sur une approche statistique de type « scoring », et sur un apprentissage préalable sur une base de données constituée de tissus humains authentiques et de matériaux typiquement utilisés pour réaliser des empreintes frauduleuses.

On a illustré en figure 1C une variante des dispositifs d'éclairage de la figure 1B, dans laquelle les dispositifs d'éclairage sont répartis en deux séries.

Une première série de dispositifs d'éclairage 1110A s'étend sur la partie gauche du capteur d'empreintes digitales.

Elle est constituée de dispositifs d'éclairage qui s'étendent chacun d'un seul tenant sur environ la moitié de la surface de détection 125 du capteur optique matriciel. Ils sont répartis selon la longueur L2 de la surface de détection 125.

Ils s'étendent en particulier au-dessus de ladite surface de détection, depuis le milieu de celle-ci dans le sens de la largeur L1, jusqu'au bord de cette surface de détection et même au-delà.

Une deuxième série de dispositifs d'éclairage 1110B s'étend sur la partie droite du capteur d'empreintes digitales.

La deuxième série de dispositifs d'éclairage 1110B est le symétrique de la première série 1110A relativement à un plan parallèle à (XOZ) passant par le milieu de la surface de détection 125, dans le sens de sa largeur L1.

Chaque dispositif d'éclairage 1110A de la première série et son symétrique 1110B dans la deuxième série, sont espacés d'une distance qui n'excède pas un tiers de la largeur L1 de la surface de détection 125, de préférence seulement quelques micromètres.

Là encore, on réalise très facilement un éclairage structuré en bandes, en pouvant positionner les unités de pilotage de chaque dispositif d'éclairement en bordure de la surface de détection 125.

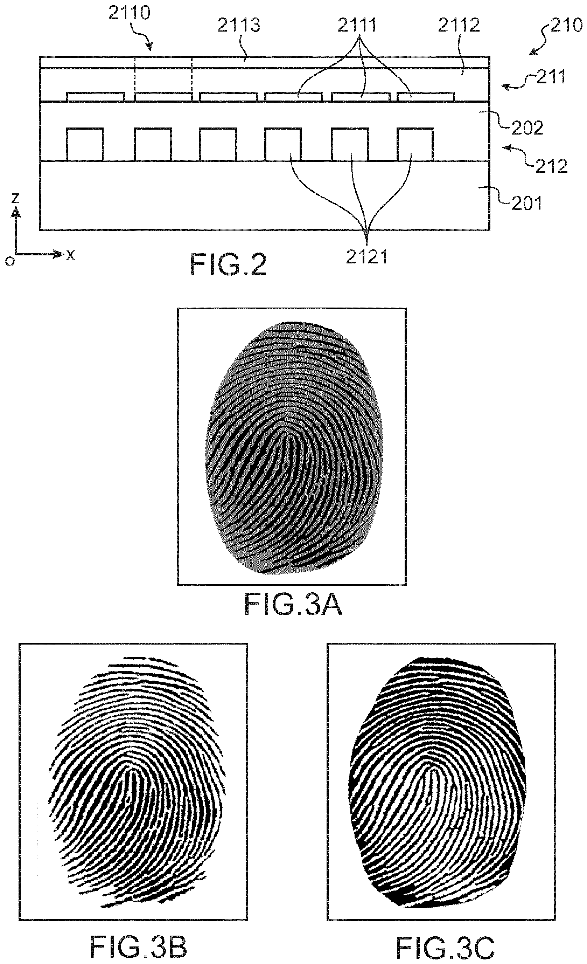

La figure 2 illustre un mode de réalisation avantageux d'un capteur d'empreintes digitales 210, adapté à la mise en œuvre d'un procédé selon l'invention.

Les moyens d'éclairage 211 sont formés par des diodes électroluminescentes organiques dites OLED formant chacune un dispositif d'éclairage 2110 selon l'invention.

Les OLED sont disposées au-dessus du capteur optique matriciel 212. Elles présentent par exemple des formes de bandes, notamment des bandes parallèles entre elles et parallèles aux lignes de pixels du capteur optique matriciel.

Les OLED, et les photo-détecteurs 2121 du capteur optique matriciel 212, sont formés sur un unique substrat 201. Dans l'exemple représenté, les OLED sont formées sur une couche de planarisation 202 couvrant les photo-détecteurs 2121.

Chaque OLED 2110 est définie par l'intersection entre une électrode 2111 inférieure, un empilement 2112 d'au moins une couche de matériau semi-conducteur organique, et une électrode supérieure 2113. Dans l'exemple représenté, les électrodes inférieures sont chacune spécifiques à une OLED, tandis qu'un unique empilement en matériau semi-conducteur organique et une unique électrode supérieure s'étendent au-dessus de l'ensemble des photo-détecteurs 2121.

De nombreuses variantes peuvent être mises en œuvre, par exemple avec un empilement de matériau semi-conducteur organique spécifique à chaque OLED.

Dans chaque mode de réalisation d'un capteur d'empreintes selon l'invention, la distance entre la surface de contact et le capteur optique matriciel est inférieure à 25 $\mu$m. Ici, le capteur optique matriciel étant disposé sous les OLED, cela implique une faible épaisseur des OLED, avantageusement inférieure à 25 $\mu$m et même à 20 $\mu$m.

Ce mode de réalisation est particulièrement avantageux, notamment car il offre une grande variété de dimensions et de formes des dispositifs d'éclairage. On peut par exemple réaliser des OLED en forme de trapèze, ou en zigzag, qui s'étendent selon (OY) et qui fournissent chacune un éclairage en bande.

Ce mode de réalisation permet de réaliser des dispositifs d'éclairage de très petite dimension selon l'axe (OX), par exemple de façon à s'étendre uniquement entre deux rangées de photo-détecteurs du capteur optique matriciel, sans recouvrir les zones photosensibles de ce dernier. Par exemple, la dimension selon (OX) de chaque OLED est inférieure à 50 $\mu$m, ou 25 $\mu$m, voire même inférieure à 10 $\mu$m.

Il permet en outre de favoriser la quantité de lumière arrivant dans les tissus, et de minimiser la diffusion de la lumière avant d'atteindre l'empreinte papillaire.

Ce mode de réalisation est également particulièrement compact, car il n'impose pas la présence de transistors de pilotage des OLED situés sous la surface de détection. Ces derniers peuvent être simplement en bordure de la surface de détection.

Enfin, il y a peu de lumière pouvant aller directement des OLED vers les pixels du capteur optique matriciel. Et même s'il y en avait, il suffirait de ne pas exploiter les pixels situés directement sous les OLED allumées.

Les figures 3A à 3C illustrent de façon schématique la sélection de pixels selon l'invention.

La figure 3A illustre de façon schématique une image acquise par le capteur optique matriciel.

A la figure 3B, on a représenté en noir les pixels associés aux crêtes de l'empreinte.

A la figure 3C, on a représenté en noir les pixels associés aux vallées de l'empreinte.

Dans la suite, à titre d'exemple, on considère que l'on s'intéresse aux pixels associés aux vallées de l'empreinte.

Cependant, on pourra également mettre en œuvre le procédé selon l'invention à la fois à partir des pixels associés aux vallées de l'empreinte, et à partir des pixels associés aux crêtes de l'empreinte, l'ensemble de ces informations pouvant servir à améliorer le pouvoir discriminant du classificateur qui sera utilisé à l'étape de comparaison.

Le fait de considérer séparément les pixels associés aux crêtes et ceux associés aux vallées permet de ne pas être perturbé par le motif des lignes de l'empreinte, le contraste apparaissant du fait de la différence de couplage entre les tissus en contact physique avec la surface de contact 106 (couplée au capteur d'empreintes) et les tissus sans contact physique avec la surface de contact 106 (non couplée au capteur d'empreintes). Le cas échéant, on peut interpoler les pixels manquants. On peut également réaliser des filtrages pour améliorer la robustesse à l'égard d'éventuelles erreurs de classifications entre pixels des vallées et pixels des crêtes. Le filtrage est par exemple une moyenne, ou une médiane, sur un segment parallèle aux dispositifs d'éclairage, et de longueur comprise entre 1 mm et 3 mm.

On va maintenant décrire en détail l'illumination de l'empreinte, et la détermination des valeurs des coefficients optiques, ici $\mu_A$ et $\mu_S'$.

Selon un premier mode de réalisation du procédé selon l'invention, les moyens d'éclairage fournissent un éclairage associé à une fonction d'éclairement spatialement périodique selon (OX).

En particulier, ils forment sur la surface de contact définie ci-avant, une figure d'éclairement, définie par une fonction d'éclairement périodique selon (OX).

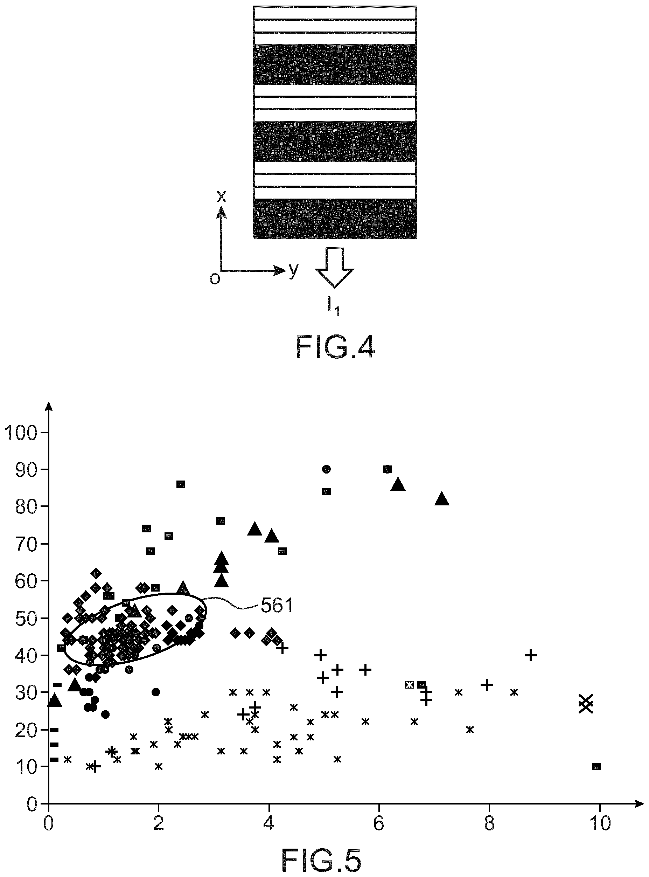

La figure 4 illustre les moyens d'éclairage, constitués alternativement de trois dispositifs d'éclairage allumés et trois dispositifs d'éclairage éteints. La fonction d'éclairement périodique est donc une fonction créneau, de fréquence $f$.

La figure d'éclairement est considérée au niveau de la surface de contact là où se positionne le doigt. Le cas échéant, l'éclairage fourni par les moyens d'éclairage compense des inhomogénéités qui vont apparaître à cause de la distance entre les moyens d'éclairage et cette surface de contact. Cette compensation n'est pas toujours nécessaire, en particulier lorsque la distance entre les moyens d'éclairage et la surface de contact est faible, par exemple inférieure à 700 $\mu$m.

Le procédé peut comprendre une étape initiale de partitionnement de chaque image acquise, selon (OX) et/ou selon (OY), pour former plusieurs régions d'intérêt.

Dans chaque image, les régions d'intérêt sont définies par les mêmes coordonnées.

Chaque région d'intérêt inclut au moins une période complète de la fonction d'éclairement périodique, de préférence plusieurs périodes (pour avoir une redondance sur la région d'intérêt).

Chaque région d'intérêt présente par exemple une surface comprise entre 5 et 20 mm$^2$, sur laquelle on suppose que le matériau constitutif de l'empreinte est homogène.

Dans la suite, on se place à l'intérieur d'une telle région d'intérêt et après sélection des pixels associés par exemple aux vallées de l'empreinte.

Si les bandes lumineuses formant la figure d'éclairement sont orientées suivant un axe correspondant (ou proche) de (OY), on peut mettre en œuvre une étape préalable de lissage d'une image, en moyennant, dans chacune des régions d'intérêt, les rangées de pixels sélectionnés suivant l'axe (OY). On peut éventuellement compléter ce lissage par un lissage suivant l'axe (OX), par une méthode usuelle (filtre médian et/ou moyen). On voudra cependant toujours moins filtrer suivant (OX) que suivant (OY).

Selon l'invention, on calcule la convolution d'une fonction d'étalement de point (PSF) associée à des coefficients $\mu_A$, $\mu_S'$ prédéterminés, avec la fonction d'éclairement sur la surface de contact du capteur d'empreinte.

Cette convolution définit une réflectance diffuse, dite réflectance prédite, associée à un jeu de valeurs des coefficients $\mu_A$, $\mu_S'$. Cette réflectance est prédite par un modèle prédictif, qui dépend des valeurs des coefficients $\mu_A$ et $\mu_S'$.

La fonction d'éclairement correspond à la figure d'éclairement, ou la succession de figures d'éclairement, formée(s) par les dispositifs d'éclairage sur la surface de contact pendant l'acquisition d'une image. La fonction d'éclairement est donc uniforme selon (OY), ou selon un axe légèrement incliné par rapport à (OY), ce qui simplifie le calcul de convolution.

On mesure ensuite à l'aide des pixels sélectionnés sur l'image acquise par le capteur optique matriciel, une réflectance diffuse, dite expérimentale. Il s'agit d'une caractéristique optique définissant la réponse du matériau constitutif de l'empreinte digitale, à un éclairage défini par ladite fonction d'éclairement.

On peut déterminer les valeurs des coefficients $\mu_A$, $\mu_S'$ associées à l'empreinte, en minimisant une différence entre la réflectance prédite, et la réflectance expérimentale.

On minimise par exemple l'écart quadratique moyen entre ces deux grandeurs.

En d'autres termes, soit une fonction d'éclairement au niveau de la surface de contact définie par $E(x_i, y_j)$ et un capteur optique matriciel à $i$ lignes et $j$ colonnes, on compare la réflectance expérimentale $R_{exp}$ obtenue à partir de l'image acquise, au résultat de la convolution de ladite fonction d'étalement du point prédéterminée avec la fonction d'éclairement utilisée. En particulier, on recherche les coefficients $\mu_A \mu_S'$ qui minimisent un écart quadratique $X_0^2$ entre ces deux grandeurs :

$$X_0^2(\mu_A, \mu_S') = \sum_i \left(R_{exp}(x_i) - R_{pred}(x_i, \mu_A, \mu_S')\right)^2 \qquad (1)$$

Avec :

$$R_{pred}(x_i, \mu_A, \mu_S') = \frac{1}{N}\sum_j^N E(x_i, y_j) * PSF_{pred}(x_i, y_j, \mu_A, \mu_S') \qquad (2)$$

En d'autres termes, on minimise un écart quadratique moyen entre les intensités mesurées et les intensités théoriques.

$X_0^2$ est un estimateur, correspondant à une somme quadratique de différences entre des réflectances expérimentales et des réflectances prédites. On considère ici des réflectances moyennes associées chacune à une ligne de pixels.

La convolution est avantageusement calculée dans l'espace de Fourier. Le calcul dans l'espace de Fourier est particulièrement avantageux lorsque la fonction d'éclairement présente des symétries.

En pratique, $E(x_i, y_j)$ est l'image de la fonction d'éclairement sur le capteur. Elle peut être obtenue par exemple, en imageant une mire sur le capteur avec le motif d'éclairage considéré.

La réflectance diffuse expérimentale $R_{exp}$ est déduite de l'image après correction par rapport à l'image $I_{REF}$ d'un étalon de référence dont les propriétés optiques $\mu_{A,REF}$, $\mu_{S,REF}'$ sont connues :

$$R_{exp}(x_i) = I(x_i) . \frac{R_{REF}\left(x_i, \mu_{A,REF}, \mu_{S,REF}'\right)}{I_{REF}(x_i)} \qquad (3)$$

Ce calcul peut être mis en œuvre indépendamment dans plusieurs régions d'intérêt telles que définies ci-avant.

Dans l'exemple illustré en figure 4, la fonction d'éclairement est une fonction créneau, de fréquence $f$.

Les réflectances expérimentale et prédite sont alors des fonctions de transfert de contraste à la fréquence $f$, notées $CTF_{exp}(f)$, respectivement $CTF_{pred}(f)$.

La fonction de transfert de contraste expérimentale à la fréquence $f$ est une caractéristique optique définissant la réponse du matériau constitutif de l'empreinte digitale, à un éclairage spatialement périodique en créneaux à la fréquence spatiale $f$.

La fonction de transfert de contraste expérimentale à la fréquence $f$ peut être calculée à l'aide de la formule suivante :

$$CTF_{exp}(f) = \frac{Max(f) - Min(f)}{Max(f) + Min(f)} \qquad (4)$$

$Max(f)$ et $Min(f)$ correspondent respectivement au minimum d'intensité et au maximum d'intensité des pixels de la région d'intérêt, le cas échéant après correction du bruit et de l'offset apportés par le capteur d'empreintes digitales.

Si la région d'intérêt comporte plusieurs périodes d'éclairage, on consolidera ces valeurs par des recherches des maxima et minima locaux de chaque période de l'éclairage.

On détermine la fonction de transfert de contraste expérimentale, à plusieurs fréquences, de préférence deux fréquences, car on souhaite déterminer les valeurs de deux coefficients, $\mu_A$ et $\mu_S'$.

De préférence, on choisit la fréquence nulle (éclairage uniforme), et une fréquence non nulle $f_1$.

La fréquence nulle est avantageuse car l'image sous éclairage uniforme est généralement acquise pour les besoins du capteur d'empreintes, et pré-enregistrée. Sinon, la fonction de transfert de contraste à la fréquence nulle peut être approchée par la valeur moyenne sur l'image.

On compare ensuite le jeu de valeurs expérimentales de ladite fonction de transfert de contraste, avec un modèle prédictif de cette fonction de transfert de contraste. Ce modèle dépend des valeurs des coefficients $\mu_A$ et, $\mu_S'$.

Pour cela, on définit le paramètre, ou estimateur, $X_1^2$ correspondant à la somme quadratique pondérée de différence entre la fonction de transfert de contraste expérimentale, et la fonction de transfert de contraste prédite par le modèle. On réalise une somme quadratique pondérée, pour consolider les résultats sur toutes les fréquences $f_i$ utilisées :

$$X_1{}^2(\mu_A, \mu_S') =$$

$$\sum_i \alpha_i \left( CTF_{mes}(f_i) - CTF_{pred}(\mu_A, \mu_S', f_i) \right)^2 \qquad (5)$$

avec :

$\alpha_i$ un coefficient de pondération correspondant à l'importance et/ou au degré de fiabilité que l'on accorde à la fréquence $f_i$.

$CTF_{pred}$ désignant la fonction de transfert de contraste théorique, prédite par le modèle pour chaque couple de valeurs de $\mu_A$ et $\mu_S'$ possible à la fréquence $f_i$

On détermine alors le couple $(\mu_A; \mu_S')$ minimisant l'estimateur $X_1^2(\mu_A, \mu_S')$, à l'aide d'une méthode de minimisation usuelle. On s'assurera de l'absence de minima locaux.

Cette méthode présente l'avantage d'être indépendante de la puissance d'éclairage, mais peut-être influencée par la présence d'un offset éventuel (bruit dû à l'éclairage ambiant, notamment). Dans la plupart des cas, on peut s'affranchir de celui-ci, par soustraction préalable des images avec une image de noir (image acquise lorsque tous les dispositifs d'éclairage sont éteints).

Alternativement, on peut réaliser la comparaison sur le ratio entre la fonction de transfert de contraste à la fréquence $f_i$ et la fonction de transfert de contraste à une fréquence $f_N$ différente et éloignée des $f_i$ (souvent, $f_N$ sera choisie petite devant les $f_i$). Cette dernière méthode présente l'avantage de s'affranchir à la fois de l'influence d'un offset éventuel et des fluctuations à long terme de la puissance d'éclairage. Elle nécessite cependant une fréquence supplémentaire (donc trois images).

Le cas échéant, on peut prendre en compte la fonction d'étalement du point associée au capteur d'empreintes digitales lui-même, par exemple en divisant les fonctions de transfert de contraste mesurées par la fonction de transfert de contraste connue du capteur d'empreintes.

Le modèle prédictif utilisé est basé par exemple sur une approche analytique, ou sur une approche stochastique de type Monte Carlo. On ne détaille pas ici ces modèles, que l'homme du métier saura retrouver, voir par exemple l'article du Journal of Biomedical Optics, 024012, March/April 2009, Vol. 14(2), « Quantitation and mapping of tissue optical properties using modulated imaging ». Un tel modèle permet de simuler la réponse d'un échantillon de coefficients $\mu_A$ et $\mu_S'$ donnés, à des conditions d'éclairement connues. Il prend en compte les conditions d'acquisition des images, par exemple l'indice optique du milieu accolé à l'empreinte (qui diffère selon que l'on considère les crêtes ou les vallées).

Ensuite, on compare les valeurs de $\mu_A$ et $\mu_S'$ à des données de référence telles qu'illustrées en figure 5, et obtenues par exemple par mesure des valeurs de $\mu_A$ et $\mu_S'$ sur des échantillons connus.

Sur la figure 5, on a représenté en abscisse la valeur $\mu_A$, et en ordonnée la valeur $\mu_S'$. Les petits triangles correspondent à des mesures de $\mu_A$ et $\mu_S'$ sur une imitation en latex d'une empreinte digitale. De la même façon, les petits carrés correspondent à de la gélatine, les croix à de la colle à bois, les x à un transparent imprimé, les X à du papier.

Seuls les losanges correspondent à de vrais doigts.

Ces mesures permettent par exemple de définir une frontière, ou seuil critique 561, englobant un maximum de mesures correspondant à de vrais doigts et excluant un maximum de mesures correspondant à de faux doigts.

En variante, on définit une fonction de classification, par exemple de type ellipse, relative à un écart moyen entre les valeurs des coefficients caractéristiques mesurées sur l'empreinte étudiée, et celles mesurées sur de vrais doigts. On obtient un coefficient relatif à une probabilité que l'empreinte étudiée corresponde à un vrai doigt.

Grâce à la partition en plusieurs régions d'intérêt, on peut déterminer les valeurs de $\mu_A$ et $\mu_S'$ séparément dans chacune de ces régions d'intérêt, et ainsi analyser l'empreinte en plusieurs emplacements répartis sur toute sa surface.

En variante, on combine les plusieurs valeurs locales de $\mu_A$ et $\mu_S'$, avant de réaliser une comparaison avec des données de référence, l'empreinte étant alors analysée de façon globale.

Selon une variante de ce mode de réalisation, la fonction d'éclairement périodique est une fonction sinusoïdale, de fréquence $f$.

On peut réaliser une telle fonction d'éclairement en agissant sur un courant d'alimentation de chaque dispositif d'éclairage, de façon à moduler l'intensité lumineuse émise par chacun d'eux.

Le résultat de la convolution de la fonction d'étalement du point avec la fonction d'éclairement est alors une fonction de transfert de modulation, à la fréquence f.

Les réflectances expérimentale et prédite sont alors des fonctions de transfert de modulation à la fréquence $f$,

notées $MTF_{exp}(f)$, respectivement $MTF_{pred}(f)$.

La fonction de transfert de modulation expérimentale à la fréquence $f$ peut être calculée comme la fonction de transfert de contraste :

$$MTF_{exp}(f) = \frac{Max(f) - Min(f)}{Max(f) + Min(f)} \qquad (6)$$

Alternativement, on peut aussi estimer la $MTF_{exp}$ en déphasant successivement trois fois les sinus de 120°, et en prenant une image à chaque fois (notées $I_1$, $I_2$ et $I_3$), pour chaque fréquence $f$ considérée.

Dans ce cas, la $MTF_{exp}$ se déduit de la relation :

$$MTF_{exp}(f) = \frac{M_{AC}(f)}{M_{DC}(f)} \qquad (7)$$

$M_{AC}(f)$ et $M_{DC}(f)$ pouvant être obtenus à l'aide des équations ci-dessous :

$$M_{AC}(f) = \frac{\sqrt{2}}{3}\left\{(I_1(f) - I_2(f))^2 + \left(I_2(f) - I_3(f)\right)^2 + \left(I_3(f) - I_1(f)\right)^2\right\}^{1/2} \qquad (8)$$

$$M_{DC}(f) = \frac{1}{3}[I_1(f) + I_2(f) + I_3(f)] \qquad (9)$$

Ensuite, on compare les fonctions de transfert de modulation prédite et expérimentale, comme détaillé ci-dessus à propos des fonctions de transfert de contraste, et en utilisant un estimateur $X_2^2$ défini par :

$$X_2^2(\mu_A, \mu_S') = \sum_i \alpha_i \left(MTF_{mes}(f_i) - MTF_{pred}(\mu_A, \mu_S', f_i)\right)^2 \qquad (10)$$

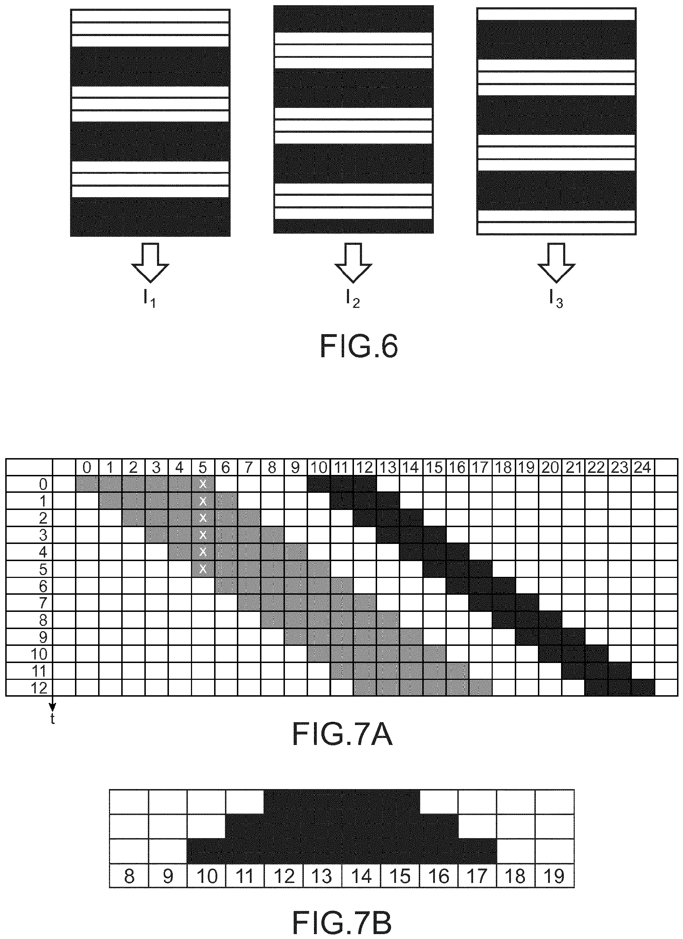

On a illustré à la figure 6, et de façon très schématique, des figures d'éclairement associées à une même fonction d'éclairement de type sinus, de période f, pour un déphasage de 0° (acquisition de l'image $I_1$), pour un déphasage de 120° (acquisition de l'image $I_2$), et pour un déphasage de 240° (acquisition de l'image $I_3$).

On considère de préférence deux fréquences, dont la fréquence nulle.

On voit que pour limiter le nombre d'images, on peut considérer $M_{DC}$ comme étant une modulation à fréquence nulle (c'est aussi la valeur d'une image sous éclairage uniforme). On peut alors utiliser seulement trois images pour calculer $M_{AC}(f)$ et $M_{DC}$.

Le calcul enseigné à l'équation (10) peut-être influencé par la présence d'un offset éventuel (bruit dû à l'éclairage ambiant, notamment).

Lorsque l'offset varie dans le temps, il peut être avantageux de faire la comparaison de l'équation (10) sur les grandeurs $M_{AC}(f)$ plutôt que sur les $MTF(f)$, ceci afin de s'affranchir des variations de l'offset (mais au détriment des fluctuations de puissance d'éclairage).

Comme pour une fonction créneau, on peut également effectuer la comparaison sur le ratio entre la fonction de transfert de modulation à la fréquence $f_i$ et la fonction de transfert de modulation à une fréquence $f_N$ différente et éloignée des $f_i$.

On décrit maintenant un procédé astucieux, pour réaliser un éclairage par une fonction d'éclairement de type sinus, en exploitant une fréquence d'intégration des pixels du capteur optique matriciel, et une fréquence de balayage de l'allumage de chaque dispositif d'éclairage, ces deux fréquences étant synchronisées.

Le capteur optique matriciel est cadencé par une horloge unique. A chaque coup d'horloge, une ligne est lue et une autre ligne est remise à zéro.

Ici, on remet à zéro une ligne située à une distance N de la ligne lue.

On a alors :

T=0, remise à zéro de la ligne N, lecture de la ligne 0.
T=1, remise à zéro de la ligne N+1, lecture de la ligne 1.

Et ainsi de suite jusqu'à T=N, remise à zéro de la ligne N+N, lecture de la ligne N.

On voit que le temps d'intégration d'une ligne i commence à T=i-N et finit à T=i.

On suppose en outre qu'à chaque instant, un ou plusieurs dispositifs d'éclairage adjacents sont allumés, les autre étant éteints. On peut donc faire balayer les dispositifs d'éclairage allumés de manière synchrone avec le balayage de l'intégration des pixels du capteur optique matriciel. Ici, trois dispositifs d'éclairage adjacents sont à chaque instant à l'état allumé.

En d'autres termes, les différentes figures d'éclairement formées à chaque instant diffèrent simplement par leur phase.

Pour simplifier l'explication, on considère que les dispositifs d'éclairage sont répartis selon (OX) selon un même pas que les pixels du capteur optique matriciel. On suppose le dispositif d'éclairage i superposé à la ligne de pixels i.

On note M le décalage, en lignes de pixels, entre la ligne de pixels lue et le dispositif d'éclairage allumé le plus proche. Chaque dispositif d'éclairage fournit un éclairage en bande.

Si par exemple N= 5, et que l'avance de la ligne est M=10, on aura :

T=0, lecture de la ligne 0, reset de la ligne 5, allumage des bandes 10, 11 et 12.
T=1, lecture de la ligne 1, reset de la ligne 6, allumage des bandes 11, 12 et 13.
T=2, lecture de la ligne 2, reset de la ligne 7, allumage des bandes 12, 13 et 14.
T=3, lecture de la ligne 3, reset de la ligne 8, allumage des bandes 13, 14 et 15.
T=4, lecture de la ligne 4, reset de la ligne 9, allumage des bandes 14, 15 et 16.
T=5, lecture de la ligne 5, reset de la ligne 10, allumage des bandes 15, 16 et 17, etc.

Ceci est illustré en figure 7A, où l'axe des ordonnées est le temps, et l'axe des abscisses est le numéro de la ligne de pixels ou de la bande d'éclairage (correspondant à un dispositif d'éclairage).

A chaque ligne de temps, on a représenté en gris les lignes de pixels intégrant la lumière, et en noir les dispositifs d'éclairage allumés.

Si l'on considère les dispositifs d'éclairage qui ont été allumés pendant l'intégration d'une ligne particulière, on obtient alors, par exemple pour la ligne de pixels 5 : un éclairage par les dispositifs d'éclairage 10 à 17 avec une contribution de 1 pour le dispositif d'éclairage 10, 2 pour le 11, 3 pour les 12 à 15, 2 pour le 16 et 1 pour le 17. La contribution correspond à une durée, en nombre de coups d'horloge, durant laquelle les pixels de la ligne 5 intègrent la lumière dudit dispositif d'éclairage.

La figure 7B représente le profil d'éclairage vu par la ligne 5. En abscisse les bandes lumineuses, ou dispositifs d'éclairage allumés, et en ordonnées la contribution de chaque bande.

La ligne de pixels suivante aura eu un profil d'éclairage similaire.

On a ainsi un motif d'éclairage présentant un décalage constant avec les lignes d'imagerie.

On peut ainsi faire en sorte que le capteur optique matriciel reçoive un éclairage associé à une fonction d'éclairement périodique. On peut considérer que la fonction est périodique, après intégration sur la durée d'intégration totale de toutes les lignes de pixels. Par abus de langage, on peut parler de fonction périodique temporellement.

Le motif d'éclairage vu par chaque ligne de pixels peut être une bande homogène (un seul dispositif d'éclairage est allumé à chaque ligne), ou une forme en trapèze telle qu'illustrée (lorsque le nombre de dispositifs d'éclairage allumés est supérieur à 1 et différent de N (N est le temps d'intégration), ou une forme en triangle lorsque le nombre de dispositifs d'éclairage allumés est égal à N.

Si le nombre de dispositifs d'éclairage est différent du nombre de lignes de pixels, par exemple la moitié, le même principe s'applique en divisant par deux la fréquence de balayage des dispositifs d'éclairage allumés (donc en allumant un même motif pendant la lecture de deux lignes de pixels).

Le motif d'éclairage vu par chaque ligne de pixels peut présenter une forme en bosse, comme illustré ici, approximant une forme sinusoïdale. On peut ainsi réaliser une approximation d'une fonction d'éclairement périodique sinusoïdale, de fréquence *f*.

On peut alors déterminer $\mu_A$ et $\mu_S{'}$ pour chaque ligne de pixels, voire même pour chaque pixel.

Chaque ligne de pixel voit la même phase connue de la fonction d'éclairement.

A la figure 7B, chaque ligne de pixels est éclairée par une fonction d'éclairement sinus présentant un premier déphasage connu, ici un déphasage nul. On acquiert une première image.

Ensuite, chaque ligne de pixels peut être éclairée par une fonction d'éclairement sinus, déphasée de $\pi$ par

rapport au premier déphasage (soit ici un déphasage de π, correspondant à une forme en creux). On acquiert une seconde image.

On peut alors approximer $M_{DC}(f)$ comme étant la moyenne de la première et de la seconde images, et $M_{AC}(f)$ comme étant la différence entre la première et la seconde image.

On peut donc estimer $MTF_{exp}$ avec seulement deux images.

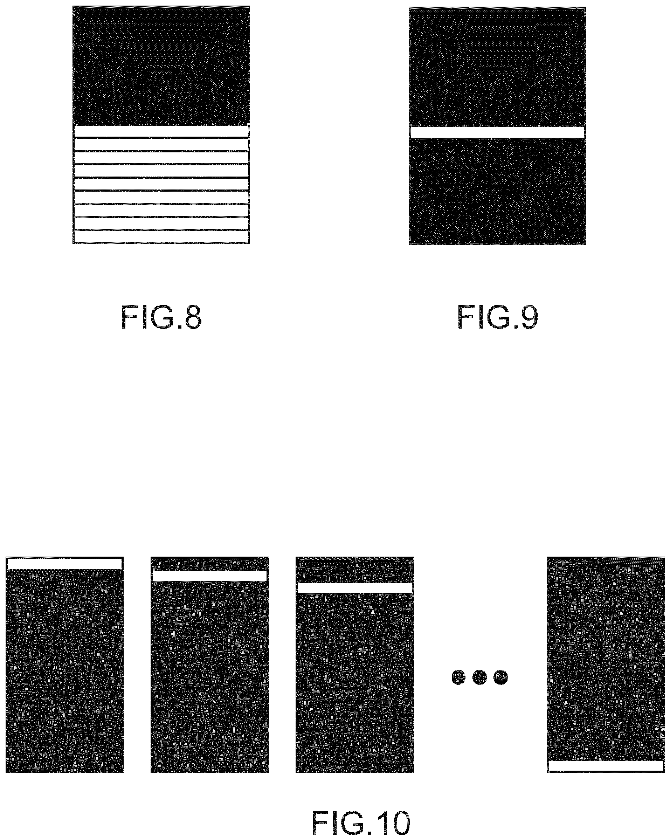

En variante, on éclaire l'empreinte par une fonction d'éclairement de type échelon, telle qu'illustrée en figure 8. Cette fonction d'éclairement est formée par une série de dispositifs d'éclairement voisins allumés, suivis d'une série de dispositifs d'éclairement voisins éteints. On caractérise ainsi une région de l'empreinte située à proximité du front montant de l'échelon. On peut caractériser différentes régions de l'empreinte, par différentes positions de ce front descendant. On peut former plusieurs échelons simultanément, à condition qu'ils soient suffisamment espacés, par exemple au moins 3 mm l'un de l'autre au niveau de la surface de contact, et de préférence entre 3 et 10 mm, voire entre 3 et 5 mm.

Le résultat de la convolution de la fonction d'étalement du point avec la fonction d'éclairement est alors une fonction d'étalement d'échelon (ou ESF, pour Edge Spread Function).

On détermine par exemple $ESF_{exp}(x)$ (fonction d'étalement d'échelon expérimentale) à partir d'un tableau regroupant, pour chaque ligne de pixels, l'intensité moyenne $I(x)$ des pixels selon (OX). On a alors :

$$ESF_{exp}(x) = \frac{I(x) - \mu}{\sigma} \qquad (11)$$

avec $\mu$ la moyenne des $I(x)$ et $\sigma$ l'écart-type des $I(x)$.

La fonction d'étalement de ligne est la dérivée selon x de la fonction d'étalement d'échelon. On remarque qu'il est plus facile de comparer des fonctions d'étalement de ligne plutôt que des fonctions d'étalement d'échelon. On peut donc déterminer $\mu_A$ et $\mu_S'$ en minimisant la fonction suivante :

$$X_3{}^2(\mu_A, \mu_S') = \sum_i \left( LSF_{exp}(x_i) - LSF_{pred}(x_i, \mu_A, \mu_S') \right)^2 \qquad (12)$$

la somme sur $i$ correspondant à la somme sur les lignes de pixels du capteur optique matriciel.

$LSF_{exp}$ peut être calculé numériquement, à l'aide des différences finies :

$$LSF_{exp}(x) = \frac{dESF_{exp}(x)}{dx} \qquad (13)$$

La comparaison évoquée dans l'équation (12) peut également se faire entre des MTF (au lieu des LSF) en prenant la transformée de Fourier des LSF.

Selon une autre variante, on éclaire l'empreinte par une fonction d'éclairement de type ligne mince, telle qu'illustrée en figure 9, pour avoir une approximation directe de la LSF. Cette fonction d'éclairement est formée de préférence par un unique dispositif d'éclairage allumé, entouré de dispositifs d'éclairage éteints. On caractérise ainsi une région de l'empreinte située à proximité du dispositif d'éclairage allumé. On peut caractériser différentes régions de l'empreinte, par différentes positions du dispositif allumé. On peut allumer plusieurs dispositifs d'éclairage simultanément, deux bandes lumineuses formées sur la surface de contact par des dispositifs d'éclairage allumés simultanément et non adjacents, étant distantes selon (OX) d'au moins 3 mm, de préférence entre 3 mm et 10 mm, voire entre 3 mm et 5 mm.

Le résultat de la convolution de la fonction d'étalement du point avec la fonction d'éclairement est alors une fonction d'étalement de ligne (ou LSF, pour Line Spread Function).

Avantageusement, ces mesures de LSF et de ESF peuvent être réalisées avec une meilleure précision lorsqu'un angle faible (inférieure à 8°) est introduit entre l'axe (OY) et la direction des motifs de la figure d'éclairement.

Selon une autre variante, au lieu de considérer des différences entre une réflectance expérimentale et une réflectance prédite, pour différentes lignes de pixels du capteur optique matriciel et pour une phase d'une fonction d'éclairement, on considère des différences entre une réflectance expérimentale et une réflectance prédite, pour une même ligne de pixels du capteur optique matriciel et pour différentes phases de la fonction d'éclairement.

Par exemple, on considère une ligne de pixels et on mesure sa réponse pour différentes positions de la ligne lumineuse associée à une fonction d'éclairement de type ligne mince.

Cette réponse consiste en un profil qui décroît lorsque la distance à la ligne mince augmente.

On peut soustraire de ces profils l'influence d'un offset (lumière ambiante), correspondant à une contribution lumineuse qui ne diminue pas lorsque la distance à la ligne mince augmente.

On peut obtenir à partir d'un tel profil les coefficients d'absorption et de diffusion réduit, en comparant ce profil à une série de profils associés chacun à un couple de valeurs connues de ces coefficients, et en sélectionnant le profil le plus ressemblant.

En variante, on met en œuvre des calculs similaires à ceux décrits précédemment, notamment aux équations (1) et (2), en considérant des différences entre une réflectance expérimentale et une réflectance prédite.

Ensuite, comme détaillé ci-avant, on compare le couple de valeurs des coefficients d'absorption et de diffusion réduit, et des données de référence.

La figure 10 illustre le balayage de l'allumage des dispositifs d'éclairage.

A la figure 10, un seul dispositif d'éclairage est allumé à la fois. En variante, plusieurs dispositifs d'éclairage non adjacents sont allumés simultanément, formant sur la surface de contact deux lignes minces lumineuses distantes selon (OX) d'au moins 3 mm, de préférence entre 3 et 10 mm, voire entre 3 et 5 mm.

Le cas échéant, on calcul un profil pour chaque pixel d'une ligne du capteur optique matriciel. On réalise ainsi une détection de fausse empreinte sur toute la surface du capteur optique matriciel.

On peut acquérir directement une image dans laquelle chaque ligne de pixels est associée à une même distance D à la ligne mince lumineuse.

Il suffit pour cela de synchroniser la fréquence d'intégration des pixels du capteur optique matriciel, et la fréquence de balayage de l'allumage des dispositifs d'éclairage, de sorte que chaque ligne de pixels intégrée soit éclairée par une ligne mince lumineuse située à cette distance connue D.

Un procédé similaire peut être mis en œuvre, pour une fonction d'éclairement de type échelon.

D'autres modes de réalisation peuvent être mis en œuvre, par exemple utilisant des éclairages, ou illuminations, à différentes longueurs d'onde de façon à déterminer des coefficients caractéristiques de l'empreinte pour différentes longueurs d'onde.

On peut utiliser différentes fonctions d'éclairement, réalisées en allumant à chaque instant plusieurs séries d'un dispositif d'éclairage ou plusieurs dispositifs d'éclairage adjacents, suffisamment éloignés les uns des autres pour pouvoir étudier indépendamment plusieurs régions de l'empreinte.

Par exemple, deux bandes lumineuses formées sur la surface de contact par des dispositifs d'éclairage allumés simultanément et non adjacents, sont distantes selon (OX) d'au moins 3 mm, de préférence entre 3 et 10 mm, voire entre 3 et 5 mm.

On peut déterminer les valeurs des coefficients caractéristiques à partir à la fois des pixels associés aux crêtes de l'empreinte, et des pixels associés aux vallées, et vérifier qu'on aboutit à la même conclusion sur l'empreinte.

On peut déterminer les valeurs des coefficients caractéristiques pour chacun des pixels du capteur optique matriciel associés aux crêtes de l'empreinte (respectivement aux vallées de l'empreinte), ou pour différentes régions d'intérêt sur lesquelles ces valeurs sont supposées homogènes.

Ensuite, on peut prendre une décision globale, par exemple avec des règles sur la surface de la plus grande composante détectée comme fraude. En variante, on peut rejeter certaines parties des images. Une autre approche consiste à renvoyer une carte indiquant ce qui est assurément vrai et ce qui est douteux dans l'image.

L'ensemble des coefficients caractéristiques mesurés à différentes longueurs d'ondes et/ou suivant plusieurs motifs d'éclairages et/ou dans différentes régions d'intérêt de l'image (pixels crêtes et pixels vallées par exemple) peuvent être utilisés comme paramètres d'entrée (prédicteurs) d'un des algorithmes d'apprentissage/classification (Machine Learning ou Deep Learning) connus de l'homme de l'art. On utilisera, par exemple, un algorithme supervisé de type SVM (Support Vector Machine) avec un noyau de type gaussien. Dans une première étape, on réalise un apprentissage sur une base de données de coefficients mesurés sur des vrais et faux doigts.

Dans une deuxième étape, l'algorithme, lorsqu'on lui soumet une nouvelle combinaison de coefficients correspondant à un doigt dont l'authenticité n'est pas connue, renvoie une fonction de score correspondant à sa probabilité d'appartenir à l'une et l'autre des deux classes (vrais et faux doigts).

L'apprentissage étant réalisé sur des caractéristiques physiques intrinsèques des matériaux, et non sur la réponse d'un instrument donné, il devient alors possible d'extrapoler celui-ci à différents capteurs de sensibilité différentes sans avoir à refaire un apprentissage.

**Revendications**

1. Procédé pour déterminer si une empreinte papillaire est constituée ou non de tissu vivant humain, l'empreinte étant en contact physique direct avec une surface de contact (106) d'un capteur d'empreintes papillaires (110 ; 210) comportant, superposés sous la surface de contact, un capteur optique matriciel (112 ; 212), et des moyens d'éclairage (111 ; 211) formés par une pluralité de dispositifs d'éclairage (1110 ; 2110) parallèles entre eux, chaque dispositif d'éclairage fournissant un éclairage en bande lumineuse, comprenant les étapes suivantes :

- illumination de l'empreinte papillaire par les moyens d'éclairage, les dispositifs d'éclairage (1110 ; 2110 ; 1110A, 1110B) formant ensemble, sur la surface de contact (106), au moins une figure d'éclairement uniforme selon un axe qui s'étend d'un côté à l'autre d'une surface de détection (125) du capteur optique matriciel, et acquisition d'une image ($I_1$, $I_2$, $I_3$) par le capteur optique matriciel, ces étapes étant mises en œuvre au moins une fois, et à chaque étape d'illumination de l'empreinte papillaire, les moyens d'éclairage (111 ; 211) forment ensemble au moins une figure d'éclairement qui est composée d'une ou plusieurs bandes lumineuses s'étendant d'un côté à l'autre de ladite surface de détection et qui est formée par les dispositifs d'éclairage parmi lesquels l'un au moins est allumé et l'un au moins est éteint;
- dans chaque image acquise, sélection (181) des pixels correspondant aux vallées de l'empreinte, ou sélection des pixels correspondant aux crêtes de l'empreinte ;
- à partir des pixels sélectionnés, extraction d'une caractéristique optique définissant la réponse à l'au moins une illumination, du matériau constitutif de l'empreinte papillaire, et utilisation de cette caractéristique optique pour déterminer les valeurs d'au moins deux coefficients optiques caractéristiques de l'empreinte ($\mu_A$, $\mu_S'$) comprenant un coefficient d'absorption ($\mu_A$) et un coefficient de diffusion réduit ($\mu_S'$) ; et
- - comparaison (183) entre lesdites valeurs et des données de référence (161; 661), pour distinguer des valeurs associées à une empreinte papillaire constituée de tissu vivant humain, et des valeurs associées à une empreinte papillaire qui n'est pas constituée de tissu vivant humain.

2. Procédé selon la revendication 1, **caractérisé en ce que** chaque figure d'éclairement s'étend au-dessus la surface de détection (125) du capteur optique matriciel, et est constituée d'une ou plusieurs bande(s) lumineuse(s) parallèle(s) à des lignes de pixels du capteur optique matriciel (112 ; 212).

3. Procédé selon l'une quelconque des revendications 1 et 2, **caractérisé en ce que** l'illumination de l'empreinte papillaire est mise en œuvre à l'aide de moyens d'éclairage (211) disposés au-dessus du capteur optique matriciel (212), et tels que chaque dispositif d'éclairage (2110) est constitué d'une diode électroluminescente organique.

4. Procédé selon l'une quelconque des revendications 1 à 3, **caractérisé en ce qu'**on détermine les valeurs des coefficients optiques caractéristiques de l'empreinte papillaire ($\mu_A$, $\mu_S'$), à l'aide d'un modèle prédictif de la réponse d'une empreinte à une fonction d'éclairement connu, ce modèle étant fonction desdits coefficients optiques caractéristiques, en minimisant un écart entre ce modèle et une mesure expérimentale de la réponse de l'empreinte papillaire à ce même éclairement, obtenue à l'aide des pixels sélectionnés.

5. Procédé selon la revendication 4, **caractérisé en ce que** le modèle prédictif est obtenu par un calcul de convolution d'une fonction d'éclairement associée à l'au moins une figure d'éclairement, avec la réponse impulsionnelle d'un milieu dont les valeurs desdits coefficients optiques caractéristiques ($\mu_A$, $\mu_S'$) sont connues.

6. Procédé selon l'une quelconque des revendications 1 à 5, **caractérisé en ce qu'**à chaque étape d'illumination de l'empreinte papillaire, les moyens d'éclairage (111; 211) forment ensemble au moins une figure d'éclairement définie par une fonction d'éclairement périodique selon l'axe de la longueur (L2) de la surface de détection du capteur optique matriciel.

7. Procédé selon la revendication 6, **caractérisé en ce que** les moyens d'éclairage (111; 211) forment ensemble une figure d'éclairement définie par une fonction d'éclairement spatialement périodique de type créneau.

8. Procédé selon l'une quelconque des revendications 1 à 5, **caractérisé en ce qu'**à chaque étape d'illumination, les moyens d'éclairage (111; 211) forment ensemble une figure d'éclairement définie par une fonction d'éclairement de type échelon.

9. Procédé selon l'une quelconque des revendications 1 à 5, caractérisé en qu'à chaque étape d'illumination, les moyens d'éclairage (111; 211) forment ensemble une figure d'éclairement définie par une fonction d'éclairement de type ligne mince.

10. Procédé selon l'une quelconque des revendications 1 à 9, **caractérisé en ce qu'**à chaque étape d'illumination, les dispositifs d'éclairage (1110 ; 2110 ; 1110A, 1110B) sont allumés et éteints pour former successivement différentes figures d'éclairement, une fréquence de balayage d'une figure d'éclairement à la suivante étant synchronisée avec une fréquence de balayage de l'intégration des lignes de pixels du capteur optique matriciel (112 ; 212 ; 312).

**11.** Procédé selon la revendication 10, **caractérisé en ce que** ladite synchronisation est mise en œuvre pour réaliser une illumination de l'empreinte papillaire par une fonction d'éclairement de type sinus, et **en ce que** l'on détermine les valeurs desdits coefficients caractéristiques de l'empreinte ($\mu_A$, $\mu_S'$) à l'aide de deux images acquises par le capteur optique matriciel, et associées à deux valeurs de phase distinctes de ladite fonction d'éclairement.

**12.** Procédé selon la revendication 10, **caractérisé en ce que** la fréquence de balayage d'une figure d'éclairement à la suivante est synchronisée avec la fréquence de balayage de l'intégration des lignes de pixels du capteur optique matriciel (112 ; 212; 312), de façon à acquérir, à l'aide du capteur optique matriciel, des images dans lesquelles chaque ligne de pixels est associée à une même distance à un point particulier des figures d'éclairement.

**13.** Système (100) pour mettre en œuvre un procédé selon l'une quelconque des revendications 1 à 12, comprenant :

- un capteur d'empreintes papillaires (110 ; 210) comportant, superposé, une surface de contact pour y appliquer l'empreinte, un capteur optique matriciel (112 ; 212), et des moyens d'éclairage (111 ; 211), formés par une pluralité de dispositifs d'éclairage (1110; 2110; 1110A, 1110B) parallèles entre eux, chaque dispositif d'éclairage fournissant un éclairage en bande lumineuse, les moyens d'éclairage (111 ; 211) étant configurés pour illuminer l'empreinte papillaire, de manière que les dispositifs d'éclairage (1110 ; 2110 ; 1110A, 1110B) forment ensemble, sur la surface de contact (106), au moins une figure d'éclairement uniforme selon un axe qui s'étend d'un côté à l'autre d'une surface de détection (125) du capteur optique matriciel, le capteur optique matriciel étant configuré pour acquérir une image ($I_1$, $I_2$, $I_3$), et les moyens d'éclairage (111; 211) étant configurés pour former ensemble au moins une figure d'éclairement qui est composée d'une ou plusieurs bandes lumineuses s'étendant d'un côté à l'autre de ladite surface de détection et qui est formée par les dispositifs d'éclairage parmi lesquels l'un au moins est allumé et l'un au moins est éteint;
- des moyens de pilotage (130), configurés pour allumer et éteindre les dispositifs d'éclairage selon au moins une étape d'illumination de l'empreinte papillaire ;
- des moyens de sélection de pixels (140), configurés pour recevoir l'au moins une image ($I_1$, $I_2$, $I_3$) acquise par le capteur optique matriciel, et en extraire les pixels correspondant aux vallées de l'empreinte, ou les pixels correspondant aux crêtes de l'empreinte, nommés pixels sélectionnés ; et
- des moyens (150) configurés pour extraire, à partir des pixels sélectionnés, une caractéristique optique définissant la réponse à au moins une illumination, du matériau constitutif de l'empreinte papillaire, et configurés pour utiliser cette caractéristique de manière à déterminer les valeurs d'au moins deux coefficients optiques caractéristiques ($\mu_A$, $\mu_S'$) comprenant un coefficient d'absorption ($\mu_A$) et un coefficient de diffusion réduit ($\mu_S'$) ; et
- des moyens de comparaison (183) entre lesdites valeurs et des données de référence (161 ; 661), pour distinguer des valeurs associées à une empreinte papillaire constituée de tissu vivant humain, et des valeurs associées à une empreinte papillaire qui n'est pas constituée de tissu vivant humain.

## Patentansprüche

**1.** Verfahren zum Bestimmen, ob ein Papillarabdruck aus lebendem menschlichem Gewebe besteht oder nicht, wobei der Abdruck in direktem physischen Kontakt mit einer Kontaktfläche (106) eines Papillarabdrucksensors (110; 210) steht, der unterhalb der Kontaktfläche übereinandergeordnet einen optischen Matrixsensor (112; 212) und Beleuchtungsmittel (111; 211) enthält, die aus einer Vielzahl von parallel zueinander verlaufenden Beleuchtungsvorrichtungen (1110; 2110) gebildet sind, wobei jede Beleuchtungsvorrichtung eine Lichtstreifenbeleuchtung bereitstellt, wobei es die folgenden Schritte umfasst:

- Ausleuchten des Papillarabdrucks durch die Beleuchtungsmittel, wobei die Beleuchtungsvorrichtungen (1110; 2110; 1110A, 1110B) zusammen auf der Kontaktfläche (106) zumindest ein gleichmäßiges Beleuchtungsmuster entlang einer Achse bilden, das sich von einer Seite einer Detektionsfläche (125) des optischen Matrixsensors zur anderen erstreckt, und Erfassen eines Bildes ($I_1$, $I_2$, $I_3$) durch den optischen Matrixsensor, wobei diese Schritte zumindest einmal ausgeführt werden und wobei bei jedem Schritt des Ausleuchtens des Papillarabdrucks die Beleuchtungsmittel (111 ; 211) zusammen zumindest ein Beleuchtungsmuster bilden, das sich aus einem oder mehreren, sich von einer Seite der Detektionsfläche zur anderen erstreckenden Lichtstreifen zusammensetzt und von den Beleuchtungsvorrichtungen gebildet wird, von denen zumindest eine eingeschaltet und zumindest eine ausgeschaltet ist;
- in jedem erfassten Bild Auswählen (181) derjenigen Pixel, die den Vertiefungen des Abdrucks entsprechen, oder Auswählen derjenigen Pixel, die den Erhebungen des Abdrucks entsprechen;
- aus den ausgewählten Pixeln Extraktion eines optischen Merkmals, das die Reaktion des den Papillarabdruck bildenden Materials auf die zumindest eine Ausleuchtung definiert, und Verwenden dieses optischen Merkmals zur Bestimmung der Werte von zumindest zwei für den Abdruck charakteristischen optischen Koeffizienten ($\mu_A$, $\mu_S'$), die einen Absorptionskoeffizienten ($\mu_A$) und einen reduzierten Diffusionskoeffizienten ($\mu_S'$) umfassen; und
- Vergleichen (183) zwischen den Werten und Referenzdaten (161; 661), um Werte, die einem Papillarabdruck zugeordnet sind, der aus lebendem menschlichen Gewebe besteht, und Werte, die einem Papillarabdruck zugeordnet sind, der nicht aus lebendem menschlichen Gewebe besteht, zu unterscheiden.

2. Verfahren nach Anspruch 1,
**dadurch gekennzeichnet, dass** sich jedes Beleuchtungsmuster über die Detektionsfläche (125) des optischen Matrixsensors erstreckt und aus einem oder mehreren Lichtstreifen besteht, die parallel zu Pixelzeilen des optischen Matrixsensors (112; 212) verlaufen.

3. Verfahren nach einem der Ansprüche 1 und 2,
**dadurch gekennzeichnet, dass** die Ausleuchtung des Papillarabdrucks mit Hilfe von Beleuchtungsmitteln (211) erfolgt, die oberhalb des optischen Matrixsensors (212) angeordnet sind, wobei jede Beleuchtungsvorrichtung (2110) aus einer organischen Leuchtdiode besteht.

4. Verfahren nach einem der Ansprüche 1 bis 3,
**dadurch gekennzeichnet, dass** die Werte der charakteristischen optischen Koeffizienten des Papillarabdrucks ($\mu_A$, $\mu_S'$) mit Hilfe eines Vorhersagemodells der Reaktion eines Abdrucks auf eine bekannte Beleuchtungsfunktion bestimmt werden, wobei dieses Modell eine Funktion der charakteristischen optischen Koeffizienten ist, indem eine Abweichung zwischen diesem Modell und einer experimentellen Messung der Reaktion des Papillarabdrucks auf dieselbe Beleuchtung minimiert wird, die mit Hilfe der ausgewählten Pixel erhalten wurde.

5. Verfahren nach Anspruch 4,
**dadurch gekennzeichnet, dass** das Vorhersagemodell durch eine Berechnung der Faltung einer Beleuchtungsfunktion, die zumindest einem Beleuchtungsmuster zugeordnet ist, mit der Impulsantwort eines Mediums, dessen Werte der charakteristischen optischen Koeffizienten ($\mu_A$, $\mu_S'$) bekannt sind, erhalten wird.

6. Verfahren nach einem der Ansprüche 1 bis 5,
**dadurch gekennzeichnet, dass** die Beleuchtungsmittel (111; 211) bei jedem Schritt des Ausleuchtens des Papillarabdrucks zusammen zumindest ein Beleuchtungsmuster bilden, das durch eine periodische Beleuchtungsfunktion entlang der Längenachse (L2) der Detektionsfläche des optischen Matrixsensors definiert ist.

7. Verfahren nach Anspruch 6,
**dadurch gekennzeichnet, dass** die Beleuchtungsmittel (111; 211) zusammen zumindest ein Beleuchtungsmuster bilden, das durch eine segmentartige, räumlich periodische Beleuchtungsfunktion definiert ist.

8. Verfahren nach einem der Ansprüche 1 bis 5,
**dadurch gekennzeichnet, dass** die Beleuchtungsmittel (111; 211) bei jedem Ausleuchtungsschritt zusammen ein Beleuchtungsmuster bilden, das durch eine stufenförmige Beleuchtungsfunktion definiert ist.

9. Verfahren nach einem der Ansprüche 1 bis 5,
**dadurch gekennzeichnet, dass** die Beleuchtungsmittel (111; 211) bei jedem Ausleuchtungsschritt zusammen ein Beleuchtungsmuster bilden, das durch eine Beleuchtungsfunktion in Form einer dünnen Linie definiert ist.

10. Verfahren nach einem der Ansprüche 1 bis 9,
**dadurch gekennzeichnet, dass** die Beleuchtungsvorrichtungen (1110; 2110; 1110A, 1110B) bei jedem Ausleuchtungsschritt ein- und ausgeschaltet werden, um nacheinander verschiedene Beleuchtungsmuster zu bilden, wobei eine Abtastfrequenz von einem Beleuchtungsmuster zum nächsten mit einer Abtastfrequenz der Integration der Pixelzeilen des optischen Matrixsensors (112; 212; 312) synchronisiert ist.

11. Verfahren nach Anspruch 10,
**dadurch gekennzeichnet, dass** die Synchronisation durchgeführt wird, um eine Ausleuchtung des Papillarabdrucks durch eine Beleuchtungsfunktion vom Sinustyp zu erhalten, und dass die Werte der charakteristischen Koeffizienten des Abdrucks ($\mu_A$, $\mu_S'$) mit Hilfe von zwei durch den optischen Matrixsensor erfassten Bildern bestimmt werden, die zwei unterschiedlichen Phasenwerten der Beleuchtungsfunktion zugeordnet sind.

**12.** Verfahren nach Anspruch 10,
**dadurch gekennzeichnet, dass** die Abtastfrequenz von einem Beleuchtungsmuster zum nächsten mit der Abtastfrequenz der Integration der Pixelzeilen des optischen Matrixsensors (112; 212; 312) synchronisiert wird, um mit Hilfe des optischen Matrixsensors Bilder zu erfassen, in denen jede Pixelzeile in gleichem Abstand einem bestimmten Punkt der Beleuchtungsmuster zugeordnet ist.

**13.** System (100) zur Durchführung eines Verfahrens nach einem der Ansprüche 1 bis 12, enthaltend:

- einen Papillarabdrucksensor (110; 210), der übereinandergeordnet eine Kontaktfläche zum Aufbringen des Abdrucks, einen optischen Matrixsensor (112; 212) und Beleuchtungsmittel (111; 211) enthält, die aus einer Vielzahl von parallel zueinander verlaufenden Beleuchtungsvorrichtungen (1110; 2110; 1110A, 1110B) gebildet sind, wobei jede Beleuchtungsvorrichtung eine Lichtstreifenbeleuchtung bereitstellt, wobei die Beleuchtungsmittel (111; 211) dazu ausgelegt sind, den Papillarabdruck auszuleuchten, wobei die Beleuchtungsvorrichtungen (1110; 2110; 1110A, 1110B) zusammen auf der Kontaktfläche (106) zumindest ein gleichmäßiges Beleuchtungsmuster entlang einer Achse bilden, die sich von einer Seite einer Detektionsfläche (125) des optischen Matrixsensors zur anderen erstreckt, wobei der optische Matrixsensor dazu ausgelegt ist, ein Bild ($I_1$, $I_2$, $I_3$) zu erfassen, und wobei die Beleuchtungsmittel (111; 211) dazu ausgelegt sind, zusammen zumindest ein Beleuchtungsmuster zu bilden, das sich aus einem oder mehreren, sich von einer Seite der Detektionsfläche zur anderen erstreckenden Lichtstreifen zusammensetzt und von den Beleuchtungsvorrichtungen gebildet wird, von denen zumindest eine eingeschaltet und zumindest eine ausgeschaltet ist;
- Steuermittel (130), die dazu ausgelegt sind, die Beleuchtungsvorrichtungen gemäß zumindest einem Schritt des Ausleuchtens des Papillarabdrucks ein- und auszuschalten;
- Pixelauswahlmittel (140), die dazu ausgelegt sind, das zumindest eine Bild ($I_1$, $I_2$, $I_3$) zu empfangen, das von dem optischen Matrixsensor erfasst wurde, und daraus diejenigen Pixel, die den Vertiefungen des Abdrucks entsprechen, oder diejenigen Pixel, die den Erhebungen des Abdrucks entsprechen, Auswahlpixel genannt, zu extrahieren; und
- Mittel (150), die dazu ausgelegt sind, aus den Auswahlpixeln ein optisches Merkmal zu extrahieren, das die Reaktion des den Papillarabdruck bildenden Materials auf zumindest eine Ausleuchtung definiert, und die dazu ausgelegt sind, dieses optische Merkmal zur Bestimmung der Werte von zumindest zwei charakteristischen optischen Koeffizienten ($\mu_A$, $\mu_S{}'$) zu bestimmen, die einen Absorptionskoeffizienten ($\mu_A$) und einen reduzierten Diffusionskoeffizienten ($\mu_S{}'$) umfassen; und
- Mittel (183) zum Vergleichen zwischen den Werten und Referenzdaten (161; 661), um Werte, die einem Papillarabdruck zugeordnet sind, der aus lebendem menschlichen Gewebe besteht, und Werte, die einem Papillarabdruck zugeordnet sind, der nicht aus lebendem menschlichen Gewebe besteht, zu unterscheiden.

**Claims**

**1.** A method for determining whether a fingerprint consists or not of human living tissue, the fingerprint being in direct physical contact with a contact surface (106) of a fingerprint sensor (110; 210) including, being superimposed under the contact surface, a matrix optical sensor (112; 212), and lighting means (111; 211) formed by a plurality of lighting devices (1110; 2110) parallel to each other, each lighting device providing lighting in light strips, comprising the following steps of:

- illuminating the fingerprint by the lighting means, the lighting devices (1110; 2110; 1110A, 1110B) forming together, on the contact surface (106), at least one uniform lighting pattern along an axis which extends from one side to the other of a detection surface (125) of the matrix optical sensor, and acquiring an image ($I_1$, $I_2$, $I_3$) by the matrix optical sensor, these steps being implemented at least once, and at each step of illuminating the fingerprint, the lighting means (111; 211) form together at least one lighting pattern which is comprised of one or more light strips extending from one side to the other of said detection surface and which is formed by the lighting devices among which at least one is switched on and at least one is switched off;
- in each image acquired, selecting (181) pixels corresponding to the valleys of the fingerprint, or selecting pixels corresponding to the peaks of the fingerprint;
- from the pixels selected, retrieving an optical characteristic defining the response to the at least one illumination, of the constituent material of the fingerprint, and using this optical characteristic to determine values of at least two characteristic optical coefficients of the fingerprint ($\mu_A$, $\mu_S{}'$) comprising an absorption coefficient ($\mu_A$) and a reduced diffusion coefficient ($\mu_S{}'$); and
- comparing (183) said values and reference data (161; 661), to distinguish values associated with a fingerprint

**EP 3 394 793 B1**

consisting of human living tissue, and values associated with a fingerprint which does not consist of human living tissue.

2. The method according to claim 1, **characterised in that** each lighting pattern extends above the detection surface (125) of the matrix optical sensor, and consists of one or more light strips parallel to pixel rows of the matrix optical sensor (112; 212).

3. The method according to any of claims 1 to 2, **characterised in that** illuminating the fingerprint is implemented using lighting means (211) disposed above the matrix optical sensor (212), and such that each lighting device (2110) consists of an organic light emitting diode.

4. The method according to any of claims 1-3, **characterised by** determining values of the characteristic optical coefficients of the fingerprint ($\mu_A$, $\mu_S$'), using a predictive model of the response of a fingerprint to a known lighting function, this model being a function of said characteristic optical coefficients, by minimising a deviation between this model and an experimental measurement of the response of the fingerprint to this same lighting, obtained using the pixels selected.

5. The method according to claim 4, **characterised in that** the predictive model is obtained by a convolution calculation of a lighting function associated with the at least one lighting pattern, with an impulse response of a medium the values of said characteristic optical coefficients ($\mu_A$, $\mu_S$') of which are known.

6. The method according to any of claims 1-5, **characterised in that** in each step of illuminating the fingerprint, the lighting means (111; 211) form together at least one lighting pattern defined by a periodic lighting function along the axis (L2) of the length of the detection surface of the matrix optical sensor.

7. The method according to claim 6, **characterised in that** the lighting means (111; 211) form together a lighting pattern defined by a square wave-type spatially periodic lighting function.

8. The method according to any of claims 1-5, **characterised in that** in each illuminating step, the lighting means (111; 211) form together a lighting pattern defined by a step-type lighting function.

9. The method according to any of claims 1-5, **characterised in that** in each illuminating step, the lighting means (111; 211) form together a lighting pattern defined by a thin line-type lighting function.

10. The method according to any of claims 1-9, **characterised in that** in each illuminating step, the lighting devices (1110; 2110; 1110A, 1110B) are switched on and off to successively form different lighting patterns, a scanning frequency from one lighting pattern to the next being synchronised with a scanning frequency of the integration of the pixel rows of the matrix optical sensor (112; 212; 312).

11. The method according to claim 10, **characterised in that** said synchronisation is implemented to perform illumination of the fingerprint by a sinus-type lighting function, and by determining the values of said characteristic coefficients of the fingerprint ($\mu_A$, $\mu_S$') using two images acquired by the matrix optical sensor, and associated with two distinct phase values of said lighting function.

12. The method according to claim 10, **characterised in that** the scanning frequency from one lighting pattern to the next is synchronised with the scanning frequency of the integration of the pixel rows of the matrix optical sensor (112; 212; 312), so as to acquire, using the matrix optical sensor, images in which each pixel row is associated with a same distance to a particular point of the lighting patterns.

13. A system (100) for implementing a method according to any of claims 1 to 12, comprising:

- a fingerprint sensor (110; 210) including, being superimposed, a contact surface to apply the fingerprint thereto, a matrix optical sensor (112; 212), and lighting means (111; 211), formed by a plurality of lighting devices (1110; 2110; 1110A, 1110B) parallel to each other, each lighting device providing lighting in light strips, the lighting means (111; 211) being configured to illuminate the fingerprint, so that the lighting devices (1110; 2110; 1110A, 1110B) form together, on the contact surface (106), at least one uniform lighting pattern along an axis which extends from one side to the other of a detection surface (125) of the matrix optical sensor, the matrix optical sensor being configured to acquire an image ($I_1$, $I_2$, $I_3$), and the lighting means (111; 211) being configured to form together at least one lighting pattern which is comprised of one or more light strips extending from one side to the other of said detection surface and which is formed by the lighting devices among which at least one is switched on and at least one is switched off;

- driving means (130), configured to switch on and off the lighting devices according to at least one step of illuminating the fingerprint;

- means (140) for selecting pixels, configured to receive the at least one image ($I_1$, $I_2$, $I_3$) acquired by the matrix optical sensor, and to retrieve therefrom the pixels corresponding to the valleys of the fingerprint, or pixels corresponding to the peaks of the fingerprint, called selected pixels; and

- means (150) configured to retrieve, from the selected pixels, an optical characteristic defining the response to at least one illumination, of the constituent material of the fingerprint, and configured to use this characteristic so as to determine the values of at least two characteristic optical coefficients ($\mu_A$, $\mu_S'$) comprising an absorption coefficient ($\mu_A$) and a reduced diffusion coefficient ($\mu S'$); and

- means (183) for comparing said values and reference data (161; 661), to distinguish values associated with a fingerprint consisting of human living tissue, and values associated with a fingerprint which does not consist of human living tissue.

100

151    161

110

140

112
121
111

z
o → y

130

150    160

FIG.1A

125    1110

L2

x
o → y

L1

FIG.1B

170 {
171₁    171₂
172₁    172₂
}

181

182

183

FIG.1D

1110A    125    1110B

L2

x
o → y

L1

FIG.1C

FIG.2

FIG.3A

FIG.3B

FIG.3C

FIG.4

FIG.5

FIG.6

FIG.7A

FIG.7B

FIG.8

FIG.9

FIG.10

## RÉFÉRENCES CITÉES DANS LA DESCRIPTION

**Documents brevets cités dans la description**

- WO 2008050070 A

- WO 2008111994 A

**Littérature non-brevet citée dans la description**

- Quantitation and mapping of tissue optical properties using modulated imaging. *Journal of Biomedical Optics,* Mars 2009, vol. 14 (2